(19) Europäisches Patentamt
European Patent Office
Office européen des brevets

(11) Numéro de publication : **0 135 443 B1**

# (12) FASCICULE DE BREVET EUROPÉEN

(45) Date de publication du fascicule du brevet : **11.11.87**

(51) Int. Cl.⁴ : **C 08 G 16/02**, C 08 J 5/24

(21) Numéro de dépôt : **84401787.1**

(22) Date de dépôt : **11.09.84**

(54) **Nouveaux polymères et prepolymères thermodurcissables résultant de la polycondensation de pyridines alcoylées et de monoaldéhydes aromatiques hydroxylés.**

(30) Priorité : **13.09.83 FR 8314546**

(43) Date de publication de la demande : **27.03.85 Bulletin 85/13**

(45) Mention de la délivrance du brevet : **11.11.87 Bulletin 87/46**

(84) Etats contractants désignés : **CH DE FR GB LI**

(56) *Documents cités :*
**FR-A- 2 261 296**
**CHEMICAL ABSTRACTS, vol. 83, 1975, page 59, no. 132728s, Columbus, Ohio, USA**
**CHEMICAL ABSTRACTS, vol. 82, 1975, page 45, no. 58678m, Columbus, Ohio, USA; M. ROPARS: "New thermosetting resin for thermoresistant composites"**

(73) Titulaire : **SOCIETE NATIONALE DES POUDRES ET EXPLOSIFS**
**12, quai Henri IV**
**F-75181 Paris Cedex 04 (FR)**

**Office National d'Etudes et de Recherches Aérospatiales (O.N.E.R.A.)**
**29 Avenue de la Division Leclerc**
**F-92320 Châtillon-sous-Bagneux (FR)**

(72) Inventeur : **Bloch, Bertrand**
**4, Square Lagarde**
**F-75005 Paris (FR)**
Inventeur : **Ropars, Marcel**
**4, Parc de Rocquencourt**
**F-78150 Rocquencourt (FR)**

(74) Mandataire : **Waligorski, Carol**
**Service de Propriété Industrielle SOCIETE NATIONALE DES POUDRES ET EXPLOSIFS 12, quai Henri IV**
**F-75181 Paris Cedex 04 (FR)**

**EP 0 135 443 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'invention est relative à de nouveaux polymères et prépolymères thermodurcissables dérivés de pyridines alcoylées, notamment de méthyl pyridines, et d'aldéhydes aromatiques, à leur préparation et à leurs applications.

On a déjà fait réagir des dérivés diméthylés et triméthylés de la pyridine sur des dialdéhydes aromatiques, ce qui conduit à la condensation entre chaque fonction aldéhyde et un des groupements méthyle situés sur l'hétérocycle aromatique azoté de la pyridine. Cette réaction de condensation a lieu lorsque le susdit groupe méthyle est situé à une position du cycle aromatique où il est activé par l'azote. Cette condition se trouve remplie par exemple pour les positions 2-, 4- et 6- de la pyridine.

Cette réaction de condensation, qui aboutit à l'établissement d'une liaison entre les radicaux du dérivé de la pyridine et du dialdéhyde aromatique par l'intermédiaire d'un groupement éthylénique, constitue la base de la synthèse d'une famille de prépolymères thermodurcissables, désignés ci-après par « résines PSP ». Ces résines, douées d'une résistance à la chaleur élevée, et bien adaptées à une utilisation en tant que matrices de matériaux composites à renfort fibreux ayant de bonnes performances mécaniques, particulièrement à haute température (jusqu'à 450 °C, la durée de vie dépendant évidemment de la température), résultent par exemple de la condensation de pyridine diméthylée en 2.6 (2.6 lutidine), de pyridine diméthylée en 2.4 (2.4 lutidine) ou de pyridine triméthylée en 2.4.6 (2.4.6 collidine) sur des dialdéhydes aromatiques, tels que le téréphtaldéhyde. De telles résines ont été décrites notamment dans les brevets français n° 2 261 296 et 2 261 297.

La réaction de condensation peut s'écrire comme suit :

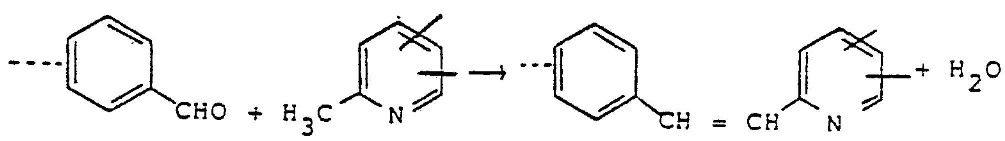

Les inventeurs ont constaté qu'en faisant réagir un dérivé polyméthylé de pyridine comportant au moins deux groupes méthyle respectivement sur au moins deux des positions 2, 4, 6 (c'est-à-dire comportant au moins deux groupes méthyle activés) sur un monoaldéhyde aromatique, on obtenait une résine, résultat surprenant car on devait s'attendre à ce que l'utilisation d'un monoaldéhyde à la place d'un dialdéhyde entraîne l'impossibilité d'établissement de pontages dans le produit de condensation et que, par conséquent, la réaction d'un dérivé polyméthylé de pyridine sur un monoaldéhyde ne conduise pas à une résine.

Or, en condensant un dérivé polyméthylé de pyridine comportant au moins deux groupes méthyle activés sur l'aldéhyde benzoïque, les Inventeurs ont obtenu une résine. De façon plus surprenante encore, en condensant un dérivé polyméthylé de pyridine comportant au moins deux groupes méthyle activés sur un monoaldéhyde aromatique comportant au moins un groupe hydroxyle, tel que l'orthohydroxy benzaldéhyde (aldéhyde salicylique) les Inventeurs ont obtenu une résine thermodurcissable.

L'invention a ainsi pour objet de nouveaux prépolymères ou résines qui sont constitués, au moins en partie, par les produits de la polycondensation d'un ou plusieurs dérivés méthylés de pyridine comportant au moins deux groupes méthyle activés (en position 2, 4, 6) et d'un ou plusieurs monoaldéhydes aromatiques comportant au moins un groupe hydroxyle.

Les prépolymères ou résines de l'invention présentent une thermostabilité sensiblement équivalente à celle des résines PSP définies ci-dessus. C'est ainsi que, les températures de début de décomposition thermique révélées par analyse thermogravimétrique, sous atmosphère inerte, sont pratiquement identiques pour les deux familles de produits et voisines de 300 °C.

Les résines de l'invention présentent toutefois, par rapport aux résines PSP, un certain nombre d'avantages indiqués ci-après.

C'est ainsi que les résines selon l'invention peuvent être synthétisées à partir de composés aldéhydiques plus facilement disponibles que ne le sont les dialdéhydes aromatiques, en particulier le téréphtaldéhyde, qui est le dialdéhyde de départ utilisé, de préférence pour préparer les résines PSP ; ceci est particulièrement le cas lorsqu'on utilise l'aldéhyde salicylique, qui est l'un des monoaldéhydes préférés utilisés pour préparer les résines selon l'invention.

Un autre avantage des résines selon l'invention est de présenter des caractéristiques de solubilité au moins équivalentes à celles des résines PSP, en particulier en présence des solvants légers du type cétonique, couramment utilisés dans les opérations d'imprégnation de fibres. L'avantage ici réside surtout dans la possibilité, au cours de la synthèse des résines selon l'invention, de poursuivre la polycondensation jusqu'à un degré de conversion suffisamment avancé, pour que les résines résultantes ne contiennent plus qu'une faible teneur en réactifs de départ, dont l'odeur peut éventuellement se révéler gênante au cours des opérations ultérieures de transformation, tout en conservant les caractères de fusibilité et de solubilité permettant leur mise en œuvre.

Enfin, un autre avantage important des résines de l'invention, par rapport aux résines PSP, est

d'assurer une meilleure conservation des propriétés mécaniques, au cours d'un vieillissement à température élevée, pour des matériaux composites dont le renfort est constitué de couches unidirectionnelles croisées, ou de plis de fibres tissées. Cet aspect sera illustré et précisé dans les exemples donnés ci-après.

Les prépolymères ou résines selon l'invention peuvent être préparés par un procédé qui consiste à faire réagir comme réactifs, au moins un dérivé de pyridine comportant au moins deux groupes méthyle activés sur un monoaldéhyde aromatique, comportant au moins un groupe hydroxyle.

Les dérivés de pyridines comportant au moins deux groupes méthyle activés qui sont avantageusement utilisés sont la diméthyl-2,4-pyridine (2,4-lutidine), la diméthyl-2,6-pyridine (2,6-lutidine), ou la triméthyl-2,4,6-pyridine (collidine).

Ces dérivés de pyridine comportant au moins deux groupes méthyle activés peuvent être utilisés seuls ou en mélange ou en présence d'isomères ou de composés de la famille des alcoylpyridines ; ces derniers entrant dans la composition des méthyl pyridines précitées, telles qu'elles sont habituellement disponibles dans le commerce.

Par monoaldéhydes aromatiques, comportant au moins un groupe hydroxyle, on désigne tous les composés présentant un ou plusieurs noyaux aromatiques et porteurs d'une fonction aldéhyde et d'au moins un groupe hydroxyle. Les monoaldéhydes aromatiques préférés de l'invention sont les dérivés du benzène, comportant un ou deux groupes hydroxyle. On utilise avantageusement l'orthohydroxybenzaldéhyde ou le parahydroxybenzaldéhyde, seuls ou en mélange.

On peut également utiliser le métahydroxybenzaldéhyde.

Selon un mode de réalisation de l'invention, il est possible de faire intervenir dans la réaction de condensation un dialdéhyde aromatique, tel que l'aldéhyde phtalique, l'aldéhyde isophtalique ou l'aldéhyde téréphtalique, l'aldéhyde isophtalique ou l'aldéhyde téréphtalique, seuls ou en mélange.

Les dérivés de pyridine comportant au moins deux groupes méthyle activés et les monoaldéhydes aromatiques peuvent être utilisés dans des proportions telles qu'elles correspondent à la réaction d'environ un groupe aldéhyde par groupe de méthyle activé.

De façon avantageuse, on utilise pour une mole de dérivé de pyridine comportant au moins deux groupes méthyle activés, environ 1 à 2 moles de monoaldéhyde comportant au moins un groupe hydroxyle. Lorsqu'on utilise un dialdéhyde aromatique, pour une mole de dérivé de pyridine comportant au moins deux groupes méthyle activés, on peut utiliser jusqu'à environ 0,5 mole de dialdéhyde aromatique.

La réaction de condensation s'effectue avantageusement par chauffage du mélange des réactifs à une température comprise entre environ 175 et environ 215 °C, généralement à la température de reflux du mélange sous la pression opératoire, et de préférence en présence d'un catalyseur susceptible de favoriser la condensation entre le groupe carbonyle du monoaldéhyde aromatique et un substituant méthyle de la pyridine, et capable d'accélérer la réaction pour la terminer en une durée allant d'environ une à quelques heures.

Le chauffage est poursuivi jusqu'à l'obtention d'un liquide visqueux, le temps de la réaction dépendant du degré de viscosité souhaité, de la nature des produits de départ, de la nature et de la quantité du catalyseur.

Par ailleurs, on opère avantageusement sous atmosphère inerte, afin de protéger les réactifs d'une oxydation par l'air. En ce qui concerne la pression, la pression atmosphérique est en général suffisante, mais on préfère souvent appliquer une légère pression pour augmenter la température de réaction.

Lorsque la condensation est effectuée sous une pression constante, en particulier la pression atmosphérique, on constate que la température de reflux du mélange réactionnel, et par conséquent la température de réaction elle-même, diminue progressivement au fur et à mesure de l'avancement de cette réaction à cause de la formation d'eau consécutive à la condensation. Il est donc possible d'élever la température d'ébullition et ainsi d'accélérer la réaction en éliminant cette eau, au fur et à mesure de sa formation, par distillation azéotropique.

Un autre moyen d'augmenter la température de la réaction est d'opérer sous une légère pression, ce qui permet d'élever la température d'ébullition sans avoir à éliminer l'eau de condensation. On a pu constater d'ailleurs que la présence de cette eau dans le prépolymère ne gênait pas sa mise en œuvre ultérieure et ne nuisait pas aux propriétés des résines après durcissement.

On peut également avoir avantageusement recours à un agent déshydratant, tel que l'anhydride acétique en proportion avoisinant la stœchiométrie relativement à la quantité d'eau éliminable, ce qui favorise la réaction et peut rendre superflue l'addition d'un catalyseur.

Comme catalyseurs, on peut utiliser des substances très diverses. De façon avantageuse, on utilise des composés susceptibles de diminuer la densité électronique de l'atome d'azote des pyridines méthylées, et éventuellement de lui conférer une charge électrique positive, par protonation, complexation ou quaternarisation. C'est ainsi qu'on utilise avantageusement les acides protoniques forts minéraux ou organiques, tels que l'acide sulfurique. L'acide paratoluène sulfonique est particulièrement préféré en raison de sa bonne solubilité dans les milieux réactionnels et les prépolymères obtenus à l'issue de la réaction de condensation. On peut également utiliser les réactifs classiquement désignés par le terme « d'acides de Lewis » tels que le chlorure d'aluminium, le chlorure de zinc, le fluorure d'étain.

D'autres substances peuvent également être utilisées pour accélérer la réaction, par exemple,

l'iodure de méthyle, le chlorure de benzyle, qui sont capables de former avec la base pyridique des dérivés d'ammonium quaternaires.

L'utilisation de tels catalyseurs n'est pas indispensable, mais elle permet de réduire la durée de la réaction. La quantité de catalyseur utilisée est de préférence de l'ordre de 0,5 à 10 % en moles par rapport aux composés pyridiniques.

Pour préparer les prépolymères selon l'invention, on peut introduire dès le début de la réaction la totalité des réactifs nécessaires.

Cependant, un mode de réalisation préféré du procédé d'obtention des prépolymères de l'invention consiste à ajouter, en continu ou par fractions, l'un quelconque des deux réactifs utilisés à la totalité de l'autre, ce dernier étant maintenu à la température opératoire. Ceci permet de mieux contrôler la progression de la réaction.

Généralement, la réaction de condensation est effectuée sans adjonction de solvant. Mais on peut également utiliser un solvant inerte, de point d'ébullition suffisamment élevé, de préférence supérieur à 150 °C, lorsque l'opération est effectuée à la pression atmosphérique pour que la température du milieu réactionnel ne soit pas limitée par l'ébullition de ce solvant.

Comme solvants, on peut utiliser un représentant de la famille dite aprotique dipolaire (diméthylformamide, N-méthylpyrrolidone, diméthylacétamide, hexaméthylphosphorotriamide), un solvant chloré (tétrachloroéthane), une cétone de point d'ébullition supérieur à 150 °C, telle que la cyclohexanone.

En contrôlant le degré d'avancement de la polycondensation, les résines ou prépolymères de l'invention, à la température ambiante, peuvent se présenter, selon les besoins, sous la forme de liquides plus ou moins visqueux ou de solides vitreux, de couleur jaune foncé, fusibles à température modérée (moins d'environ 100 °C) et solubles dans des solvants légers courants de type alcoolique ou cétonique, et mélanges de ces solvants tels que l'éthanol, le propanol, les solvants cétoalcooliques à base d'acétone ou de méthyléthylcétone, les solvants aprotiques dipolaires, certains solvants chlorés (chloroforme, dichloroéthane, tétrachloroéthane).

La forme solide représente l'état préféré des prépolymères de l'invention dans la mesure où, ainsi qu'on l'a déjà mentionné précédemment, il est possible d'atteindre un degré avancé de polycondensation sans grand risque de gélification ou de perte prématurée de solubilité. Les avantages qui résultent de l'obtention d'une résine à haut niveau de condensation proviennent essentiellement de sa teneur réduite en matières volatiles susceptibles d'être éliminées au cours des opérations de durcissement thermique, et également de la possibilité d'effectuer des moulages à température d'autant plus basse que la condensation est plus avancée.

Le temps nécessaire pour atteindre la gélification est, en effet, à température donnée, une fonction inverse de degré d'avancement de la résine : c'est ainsi que pour un des prépolymères préférés, préparé à base de collidine et d'aldéhyde salicylique, le temps de gélification peut, à environ 200 °C, varier entre environ 0,5 et environ 3 heures, suivant le degré de condensation ; ce fait, dans ce dernier cas, incitera à effectuer de préférence le moulage à température plus élevée, afin de conserver une durée raisonnable à l'opération.

Les prépolymères peuvent être mis en œuvre par les différentes techniques classiques s'appliquant aux résines thermodurcissables. Les prépolymères en poudre se prêtent en particulier à une mise en forme par moulage sous pression, mais ils peuvent également être dissous dans un solvant ou fondus.

Dans tous les cas le prépolymère est avantageusement durci par le traitement thermique à une température comprise entre environ 200 et environ 300 °C. On obtient finalement un polymère infusible et insoluble. Ce polymère présente une excellente stabilité thermique.

Les résines selon l'invention sont susceptibles de nombreuses applications où leurs bonnes propriétés mécaniques aux températures élevées peuvent être mises à profit. Toutefois, l'invention vise plus particulièrement leur application à la réalisation de matériaux composites, notamment de matériaux stratifiés. Ces derniers sont réalisés de manière classique par imprégnation de fibres, plus spécialement de verre ou de carbone, en mèches, en bandes larges ou en structures tissées, à l'aide des résines de l'invention utilisées telles quelles à chaud ou en solution à la température ambiante. Ces matériaux préimprégnés intermédiaires peuvent ensuite être moulés, suivant les cas entre environ 200 et environ 225 °C, puis rendus totalement infusibles par postcuisson à environ 250 ou environ 300 °C.

Les résines selon l'invention peuvent également être utilisées pour l'imprégnation de fibres courtes et l'élaboration de poudres à mouler.

Les matériaux composites obtenus à partir des résines selon l'invention peuvent supporter des températures élevées, de l'ordre de 250 °C, pendant une durée prolongée, par exemple d'environ 500 à environ 1 000 heures, sans que l'on ait à craindre une diminution sensible de leurs propriétés mécaniques, même si leur renfort est du type à couches croisées ou tissées, alors que dans le cas des résines PSP, les propriétés mécaniques se dégradent assez rapidement dans les susdites conditions de temps et de température.

L'invention sera maintenant plus complètement décrite dans le cadre des exemples particuliers de mise en œuvre.

Exemple 1

Préparation d'une résine parahydroxybenzaldéhydecollidine

Dans un réacteur d'un litre muni d'un dispositif de balayage par un gaz inerte, et équipé d'un réfrigérant ascendant, d'un système de prélèvement continu de l'eau formée au cours de la réaction, d'un agitateur et d'un thermomètre, on introduit 2 moles de collidine pure à 99 % (commercialisée par Erba), 4 moles de parahydroxybenzaldéhyde, et 3,7 % d'acide paratoluène sulfonique, les pourcentages étant exprimés en moles par moles de collidine.

Le mélange réactionnel est chauffé à reflux pendant 1,5 heures ; au cours de ce traitement, la température du milieu évolue de 180 à 200 °C, et on recueille, au bout de ce temps, 80 % environ de l'eau devant théoriquement se former pour une réaction complète.

Après refroidissement, le prépolymère formé se présente sous la forme d'un solide se ramollissant progressivement entre 40 et 80 °C, soluble dans l'éthanol, le propanol, et dans des mélanges cétoalcooliques à base d'acétone ou de méthyléthylcétone. Son durcissement thermique à 250 °C s'accompagne d'une perte de poids de 10 % environ.

Fabrication d'un stratifié à renfort de tissu de verre

Une solution à 50 % de résine est réalisée à l'aide d'un mélange méthyléthylcétone/propanol (75/25). Un tissu de verre E (sous la marque Stevens-Genin 1581 à « finish » A 1100) est imprégné à la température ambiante jusqu'à un taux d'environ 65 %.

L'élimination de la plus grande partie du solvant (en 15 minutes à 100 °C) conduit à un tissu préimprégné ayant les qualités de collant et de drapabilité convenables pour la réalisation de stratifiés, avec un taux de matières volatiles résiduelles de l'ordre de 10 %.

Après découpage, les plis de tissu préimprégné sont empilés dans un moule muni de flancs ; ce dernier est alors fermé par le poinçon placé sur des cales d'une épaisseur légèrement supérieure à celle de l'empilement afin d'éviter l'essorage du préimprégné pendant la première phase du moulage. Il est ensuite placé entre les plateaux d'un presse préchauffés à 200 °C. Les cales sont retirées au bout de 30 minutes à cette température, et on applique une pression de 10 bars. Après une durée totale de séjour de 3 heures à 200 °C, la température du moule est portée à 250 °C, et maintenue pendant 2 heures à ce niveau. Le refroidissement du moule est effectué sans pression.

Pour conférer au stratifié ainsi obtenu les propriétés mécaniques maximum à chaud, il est nécessaire de lui faire subir un post-traitement thermique de 16 heures à 250 °C. Ce traitement est effectué en atmosphère confinée, sur des éprouvettes préalablement découpées, selon les normes ASTM d'essais de flexion et de cisaillement interlaminaire induit.

Propriétés mécaniques des stratifiés

Pour un stratifié fabriqué suivant la technique précédemment décrite, et ayant un taux de renfort de 50 % environ en volume, les résistances à la rupture en flexion et cisaillement interlaminaire, à 20 et 250 °C, ont été déterminées selon les normes ASTM précitées, en parallèle avec celles d'un matériau analogue, également à renfort de tissu de verre E, élaboré à partir d'une résine « PSP » commerciale (type 6022 M fabriquée par la SNPE). Pour les deux matériaux, les essais ont été effectués après des vieillissements de 100 heures et 500 heures à la même température.

Tableau I

| Traitement à 250°C | Résine de l'invention | | | Résine "PSP" | |
|---|---|---|---|---|---|
| | 16h | 100h | 500h | 16h | 100h |
| Flexion 20° (MPa) | 660 | 550 | 240 | 450 | 200 |
| Flexion 250° (MPa) | 420 | 430 | 200 | 400 | 250 |
| Cisaillement 20°(MPa) | 52 | 53 | 21 | 35 | 20 |
| Cisaillement 250°(MPa) | 45 | 30 | 20 | 30 | 20 |

Les avantages procurés par l'utilisation d'une des résines de l'invention se manifestent très

clairement au vu de ces résultats : amélioration d'environ 40 à 50 % des propriétés initiales, et, en vieillissement thermique, obtention d'un taux identique de conservation des performances mécaniques au bout d'un temps cinq fois plus long.

## Exemple 2

Préparation d'une résine orthohydroxybenzaldéhyde (aldéhyde salicylique)-collidine en introduisant dès le début de la réaction deux moles d'aldéhyde pour une mole de collidine

Dans un réacteur de 250 ml équipé comme à l'exemple 1, on introduit une mole d'aldéhyde salicylique, une demi-mole de collidine et comme catalyseur 1,8 % d'acide paratoluène sulfonique en moles par rapport à la collidine.

Le mélange chauffé à reflux (température initiale : 180 °C) fournit, en 1 h 30 mn, 20 % de l'eau de polycondensation attendue pour la réaction complète, laquelle se dépose à la base du collecteur de reflux. Les vapeurs d'ébullition s'étant enrichies en aldéhyde salicylique dont la densité est supérieure à celle de l'eau, on n'obtient plus, au-delà de ce temps, de séparation franche des phases aqueuses et organiques dans le collecteur. Pendant les 4 heures suivantes, on cesse donc de prélever l'eau, ce qui entraîne progressivement une baisse à 150 °C de la température réactionnelle. Après un temps total de 5 h 30, la phase aqueuse située alors en haut du collecteur peut être prélevée, ce qui conduit à une remontée progressive de la température jusqu'à 210 °C après une durée totale de 7 h 30 mn. La réaction est alors arrêtée définitivement.

La quantité totale d'eau prélevée est alors de 45 % de la quantité théorique pour la réaction complète ; la résine obtenue est, à température ambiante, un solide brun rougeâtre durcissant avec élimination de 15 % de volatiles et facilement soluble à 900 $g \cdot l^{-1}$ dans la méthyléthylcétone, ce qui permet de réaliser des solutions d'imprégnation de renforts fibreux. Son temps de gélification à 225 °C est de l'ordre de 50 mn ; elle est donc sensiblement moins réactive que la résine de l'exemple 1.

Fabrication d'un stratifié à renfort de tissu de carbone

En opérant dans les mêmes conditions qu'à l'exemple 1, on imprègne, avec la solution décrite ci-dessus, du tissu de fibres de carbone Toray, 300 B (marque commerciale) sous la marque Stevens-Génin 43377 et un séchage partiel de 8 à 10 mn à 100 °C fournit un préimprégné à la drapabilité et au collant satisfaisants.

Après découpage, on dispose les plis de préimprégnés dans un moule identique à celui de l'exemple 1 et on place des cales séparant l'empilement du poinçon. L'ensemble est porté à 225 °C entre les plateaux d'une presse. La gélification de la résine à cette température s'effectuant entre 35 et 50 mn, et on retire les cales après 20 mn et on applique une pression de 12 bars progressivement en 15 mn. Après une durée totale de 3 heures à 225 °C, la température est portée à 250 °C pendant 2 heures et le refroidissement est effectué sous pression en décroissance lente.

Le stratifié obtenu a un taux volumique de fibres de 60 % et une porosité de l'ordre de 2,5 %.

Propriétés mécaniques et thermiques du stratifié

En raison de la plus faible réactivité des résines dérivées de l'aldéhyde salicylique, un post-traitement hors presse de 100 heures à 250 °C (ou de 3 heures/300 °C), au lieu de 16 heures pour la résine de l'exemple 1, est nécessaire à l'obtention de la thermostabilité maximale du composite. Sa résistance en flexion est alors de 600 MPa à température ambiante et de 575 à 250 °C ; sa tenue en cisaillement interlaminaire entre appuis rapprochés est de 28 MPa à température ambiante et de 25 à 250 °C. Après 1 000 heures à 250 °C, la rétention de ces propriétés est de 60 % en flexion et de 80 % en cisaillement ; les éprouvettes de flexion ont alors perdu 8 % de leur poids.

L'avantage de l'utilisation des nouvelles résines comme matrices de stratifiés à renfort de carbone tissé, est rendu plus évident par la considération du tableau II, où ces résultats sont rassemblés en comparaison avec ceux obtenus à partir d'un stratifié analogue mais dont la matrice est constituée de résine « PSP » (type 6022 M fabriquée par la SNPE).

## Exemple 3

Préparation d'une résine aldéhyde salicylique-collidine avec introduction progressive de la collidine

Dans l'appareillage décrit à l'exemple 1, on introduit une mole d'aldéhyde salicylique et la même quantité d'acide paratoluène sulfonique qu'à l'exemple 1. Au moyen d'une ampoule à brome montée sur le réacteur, on introduit, goutte à goutte, une quantité de collidine technique commercialisée sous la marque « Rutgers » (93 % de méthyl pyridines réactives) correspondant à une demi-mole de méthyl pyridines réactives. Cette introduction dure 3 h 30 au cours desquelles on recueille 40 % de l'eau devant être obtenue par la polycondensation complète ; elle constitue constamment la phase supérieure dans le

collecteur et la température réactionnelle reste stable autour de 195 °C. En poursuivant la réaction pendant une heure, la température s'élève à 210 °C et la quantité d'eau recueillie passe alors à 60 %. La durée totale de la synthèse est donc de 4 h 30 mn à l'issue desquelles la résine solide à température ambiante et d'aspect semblable à celle de l'exemple 2 libère également 15 % de volatiles au cours du durcissement, mais sa chromatographie sur gel indique la présence de 20 % de composants ayant une masse molaire globalement supérieure à 3 000 alors que la résine de l'exemple 2 n'en contient que 5 %. Ce degré de condensation plus élevé se traduit par une diminution du temps de gélification qui n'est plus que de 1 h 20 mn à 200 °C. Cependant sa solubilité par la méthyléthylcétone dans le but d'obtenir une solution d'imprégnation à froid reste excellente.

Fabrication d'un stratifié à renfort de tissu de carbone

L'imprégnation d'un même renfort qu'à l'exemple 2 est réalisé dans les mêmes conditions ainsi que le séchage partiel.

Compte tenu d'un temps de gélification de durée raisonnable à 200 °C, c'est à cette température que le moulage à la presse est réalisé. On retire les cales après 1 heure à 200 °C, on met en pression progressive avec 12 bars après 1 h 15 mn, on porte la température à 250 °C après 3 heures à 200 °C, on arrête avec refroidissement lent sous pression en décroissance après 2 heures à 250 °C.

Propriétés mécaniques et thermiques du stratifié

Pour cette résine plus condensée, un post-traitement ne durant que 16 heures à 250 °C suffit pour obtenir des propriétés mécaniques et thermiques identiques à celles du stratifié de l'exemple 2.

## Exemple 4

Préparation d'une résine aldéhyde salicylique-collidine avec introduction progressive de l'aldéhyde

Dans l'appareillage décrit à l'exemple 3, on introduit dans le réacteur la quantité de collidine technique nécessaire pour avoir une demi-mole de méthyl pyridines réactives et la même quantité d'acide paratoluène sulfonique qu'à l'exemple 3. On introduit dans l'ampoule à brome une mole d'aldéhyde salicylique qui s'écoule dans le mélange à reflux en 3 h 30 mn. Pendant ce temps, la température s'élève de 175 à 195 °C, l'eau se dépose à la partie inférieure du collecteur et l'on recueille 40 % de la quantité théorique devant se former pour la réaction complète. La synthèse est poursuivie pendant une heure. De plus, au cours de la synthèse, la température s'élève jusqu'à 215 °C. La durée totale de la synthèse est donc de 4 h 30 mn, l'eau totale prélevée représente 80 % et la résine obtenue, solide à température ambiante, libère 20 % de volatile au durcissement et contient 12 % de composants de masses molaires supérieures à 3 000. Ici encore, ce degré de condensation plus élevé que pour la résine de l'exemple 2 se traduit par un taux de gélification plus court, de 1 h 30 mn à 200 °C.

Fabrication d'un stratifié à renfort de tissu de carbone

La mise en solution, l'imprégnation et le séchage partiel du préimprégné sont les mêmes qu'à l'exemple 3.

Le moulage peut être réalisé soit à 200 °C (retrait des cales après 1 h 10 mn et 12 bars après 1 h 25 mn) soit à 225 °C (retrait des cales après 15 mn et 12 bars après 30 mn). Dans les deux cas, la température de mise en pression est maintenue pendant 3 heures, puis portée à 250 °C et maintenue pendant 2 heures.

Les performances mécaniques sont sensiblement les mêmes que pour les stratifiés des exemples 2 et 3.

## Exemple 5

Préparation d'une résine aldéhyde salicylique 2-6 lutidine

Dans l'appareillage de l'exemple 2 comportant un réacteur de 250 ml, on introduit successivement une mole d'aldéhyde salicylique, une demi-mole de lutidine-2,6 et la même quantité de catalyseur qu'aux exemples 2 à 4. Le mélange est maintenu à reflux pendant 7 heures au cours desquelles la température croît de 175 à 215 °C. L'eau de polycondensation constitue d'abord la couche inférieure et l'on peut prélever 40 % de la quantité théorique au cours des 5 premières heures. Pendant la demi-heure suivante, elle n'est plus prélevable mais entre 8 h 30 mn et 7 heures, elle peut être recueillie en haut du collecteur ; la quantité totale prélevée est de 75 %. La résine a l'aspect des résines précédentes : elle est solide à froid, diluable par la méthyléthylcétone et libère 15 % de volatiles au durcissement et contient 25 % de composants de masses molaires supérieures à 3 000. Son temps de gélification est de 45 mn à 225 °C.

Fabrication d'un stratifié à renfort de tissu de carbone

La mise en solution, l'imprégnation et le séchage partiel sont les mêmes qu'aux exemples 2 à 4. Le moulage est réalisé à 225 °C avec retrait des cales après 5 mn et application progressive de 12 bars en 15 mn. Le cycle de moulage est de 3 heures à 225 °C et 2 heures à 250 °C.

Propriétés mécaniques et thermiques du stratifié

Après 100 heures de recuit à 250 °C, un stratifié à 60 % de renfort en volume permet d'obtenir 800 MPa en flexion à température ambiante et 600 MPa à 250 °C. En cisaillement, on obtient 33 MPa à température ambiante et 30 à 250 °C. Après 1 000 heures de vieillissement thermique à 250 °C, on obtient 400 MPa en flexion à température ambiante et à 250 °C avec une perte de poids des éprouvettes de 7 %. En cisaillement, on obtient 25 MPa à température ambiante et 20 MPa à 250 °C. Ces derniers résultats sont également reportés sur le tableau II, ce qui permet de les confronter avec ceux provenant d'une résine PSP.

(Voir Tableau II page 9)

Tableau II

Propriétés mécaniques et thermiques comparées des stratifiés à renfort de tissu de carbone T 300 B avec les différentes matrices

| Mesures | Résine PSP 6022 M | | | | Résines aldéhydes salicylique -collidine | | | | Résines aldéhyde salicylique -2,6-lutidine | | | |
|---|---|---|---|---|---|---|---|---|---|---|---|---|
| | | | 1 000 h/250° | | | | 1 000 h/250° | | | | 1 000 h/250° | |
| | NR (1) | R (2) | σ (3) | Δm/m (4) | NR | R | σ | Δm/m | NR | R | σ | Δm/m |
| Flexion (MPa) | | | | | | | | | | | | |
| 20° | 860 | 600 | 120 | 12 % | 650 | 560 | 330 | 8 % | 620 | 800 | 400 | 7 % |
| 250° | 550 | 600 | 100 | | 150 | 530 | 300 | | 100 | 580 | 380 | |
| Cisaillement (MPa) | | | | | | | | | | | | |
| 20° | 50 | 30 | 10 | | 30 | 25 | 20 | | 38 | 33 | 25 | |
| 250° | 30 | 30 | 10 | | 7 | 25 | 20 | | 7 | 30 | 20 | |

(1) NR : non recuit (2) R : recuit (3) σ : contrainte à la rupture

(4) Δm/m : perte de masse de l'échantillon

**Revendications**

1. Prépolymères thermodurcissables caractérisés en ce qu'ils sont constitués, au moins en partie, par les produits de réaction de polycondensation d'un ou plusieurs dérivés méthylés de la pyridine comportant au moins deux groupes méthyle activés (en position 2, 4, 6) avec un ou plusieurs monoaldéhydes aromatiques, comportant au moins un groupe hydroxyle.

2. Prépolymères selon la revendication 1, caractérisés en ce que la polycondensation fait intervenir un dialdéhyde aromatique.

3. Prépolymères selon l'une quelconque des revendications 1 ou 2, caractérisés en ce que le dérivé de pyridine est choisi parmi la triméthyl-2,4,6-pyridine, la diméthyl-2,4-pyridine ou la diméthyl-2,6-pyridine.

4. Prépolymères selon l'une quelconque des revendications précédentes, caractérisés en ce que le monoaldéhyde aromatique comporte un ou deux groupes hydroxyle.

5. Prépolymères selon l'une quelconque des revendications 1 à 4, caractérisés en ce que le monoaldéhyde aromatique est choisi parmi l'orthohydroxybenzaldéhyde, le métahydroxybenzaldéhyde ou le parahydroxybenzaldéhyde.

6. Prépolymères selon l'une quelconque des revendications 1 à 5, caractérisés en ce que le dialdéhyde aromatique est choisi parmi l'aldéhyde phtalique, l'aldéhyde isophtalique ou l'aldéhyde téréphtalique.

7. Prépolymères selon l'une quelconque des revendications 1 à 6, caractérisés en ce qu'ils sont sous la forme de liquides visqueux solubles dans des solvants, tels que des solvants de type alcoolique ou cétonique, notamment l'éthanol, le propanol, l'acétone, la méthyléthylcétone, seuls ou en mélange : des solvants de type aprotique dipolaire, notamment le diméthylformamide, le diméthylacétamide, la N-méthylpyrrolidone, des solvants chlorés notamment le chloroforme, le dichloro-éthane, le tétrachloroéthane.

8. Prépolymères selon l'une quelconque des revendications 1 à 6, caractérisés en ce qu'ils sont sous forme de solides vitreux fusibles et solubles dans des solvants, tels que des solvants de type alcoolique ou cétonique, notamment l'éthanol, le propanol, l'acétone, la méthyléthylcétone, seuls ou en mélange : des solvants du type aprotique dipolaire, notamment le diméthylformamide, le diméthylacétamide, la N-méthylpyrrolidone, des solvants chlorés notamment le chloroforme, le dichloro-éthane, le tétrachloroéthane.

9. Procédé de préparation de polymères selon l'une quelconque des revendications 1 à 8, caractérisé en ce que l'on fait réagir un dérivé de la pyridine comportant au moins deux groupes méthyle activés en (positions 2, 4, 6), notamment la triméthyl-2,4,6-pyridine sur un monoaldéhyde aromatique comportant au moins un groupe hydroxyle, notamment l'aldéhyde salicylique.

10. Procédé de préparation de prépolymères selon la revendication 9, caractérisé en ce qu'il consiste à faire réagir des quantités respectives de dérivé de pyridine comportant au moins deux groupes méthyle activés et de monoaldéhyde aromatique correspondant à la mise en présence d'environ un groupe aldéhyde pour un groupe méthyle activé, à une température comprise entre environ 175 °C et environ 215 °C, de préférence à la température de reflux du mélange réactionnel, jusqu'à l'obtention d'un liquide visqueux ou d'un solide vitreux.

11. Procédé selon la revendication 9, caractérisé en ce que l'on fait réagir, pour une mole de dérivé de pyridine, environ 1 à environ 2 moles de monoaldéhyde aromatique et environ 0 à environ 0,5 mole de dialdéhyde aromatique.

12. Procédé selon l'une des revendications 9 à 11, caractérisé en ce qu'il comprend en outre l'addition d'un catalyseur de la réaction de polycondensation d'un monoaldéhyde aromatique sur un dérivé de pyridine comportant des groupes méthyle activés, tel que l'acide sulfurique, l'acide paratoluène sulfonique, le chlorure d'aluminium, le chlorure de zinc, le fluorure d'étain, l'iodure de méthyle ou le chlorure de benzyle, utilisé en proportion de l'ordre de 0,5 à 10 % en moles par rapport aux composés pyridiniques.

13. Procédé selon l'une quelconque des revendications 9 à 12, caractérisé en ce que la réaction de polycondensation est effectuée en présence d'un agent déshydratant, tel que l'anhydride acétique.

14. Procédé selon l'une quelconque des revendications 9 à 13, caractérisé en ce que la réaction de polycondensation est effectuée dans un solvant inerte, dont le point d'ébullition est de préférence supérieur à 150 °C, tel qu'un solvant aprotique dipolaire, un solvant chloré, une cétone de point d'ébullition supérieur à 150 °C.

15. Procédé de préparation de polymères, caractérisé en ce que l'on met en forme des prépolymères selon l'une quelconque des revendications 1 à 8, par tout procédé connu, notamment par moulage des prépolymères, à l'état liquide, éventuellement dissous dans un solvant, ou par moulage sous pression de prépolymères en poudre, et en ce qu'on les soumeet à un traitement thermique de durcissement à une température de l'ordre de 200 à 300 °C.

16. Procédé selon la revendication 15, caractérisé en ce que le traitement thermique de durcissement comporte un maintien du prépolymère mis en forme à une température de l'ordre de 200 °C, avant chauffage subséquent à plus de 220 °C.

17. Application des prépolymères selon l'une quelconque des revendications 1 à 8, à la réalisation de

matériaux composites, notamment de stratifiés, par imprégnation de matières fibreuses au moyen desdits prépolymères et durcissement sous pression des matières fibreuses ainsi imprégnées.

18. Matériaux composites, notamment sous forme de stratifiés, constitués de fibres telles que des fibres de carbone et de prépolymères selon l'une quelconque des revendications 1 à 8, à l'état durci.

**Claims**

1. Thermosetting prepolymers, characterized in that they consist at least partially of the reaction products of polycondensation of one or more methylated derivatives of pyridine containing at least two activated methyl groups (in the 2- and/or 4- and/or 6-positions) with one or more aromatic monoaldehydes containing at least one hydroxyl group.

2. Prepolymers according to Claim 1, characterized in that the polycondensation involves an aromatic dialdehyde.

3. Prepolymers according to either of Claims 1 and 2, characterized in that the pyridine derivative is chosen from 2,4,6-trimethylpyridine, 2,4-dimethylpyridine or 2,6-dimethylpyridine.

4. Prepolymers according to any one of the preceding claims, characterized in that the aromatic monoaldehyde contains one or two hydroxyl groups.

5. Prepolymers according to any one of Claims 1 to 4, characterized in that the aromatic monoaldehyde is chosen from ortho-hydroxybenzaldehyde, meta-hydroxybenzaldehyde or para-hydroxybenzaldehyde.

6. Prepolymers according to any one of Claims 1 to 5, characterized in that the aromatic dialdehyde is chosen from phthalaldehyde, isophthalaldehyde or terephthalaldehyde.

7. Prepolymers according to any one of Claims 1 to 6, characterized in that they are in the form of viscous liquids which are soluble in solvents such as solvents of the alcohol or ketone type, in particular ethanol, propanol, acetone or methyl ethyl ketone, alone or mixed ; solvents of the dipolar aprotic type, in particular dimethylformamide, dimethylacetamide or N-methylpyrrolidone ; or chlorinated solvents, in particular chloroform, dichloroethane or tetrachloroethane.

8. Prepolymers according to any one of Claims 1 to 6, characterized in that they are in the form of fusible glassy solids which are soluble in solvents such as solvents of the alcohol or ketone type, in particular ethanol, propanol, acetone or methyl ethyl ketone, alone or mixed ; solvents of the dipolar aprotic type, in particular dimethylformamide, dimethylacetamide or N-methylpyrrolidone ; or chlorinated solvents, in particular chloroform, 1,2-dichloroethane or 1,1,2,2-tetrachloroethane.

9. Process for preparing polymers according to any one of Claims 1 to 8, characterized in that a pyridine derivative containing at least two activated methyl groups (in the 2- and/or 4- and/or 6-positions), in particular 2,4,6-trimethylpyridine, is reacted with an aromatic monoaldehyde containing at least one hydroxyl group, in particular salicylaldehyde.

10. Process for preparing prepolymers according to Claim 9, characterized in that it consists in reacting pyridine derivative containing at least two activated methyl groups and aromatic monoaldehyde in respective quantities which correspond to the exposure of approximately one aldehyde group to one activated methyl group, at a temperature of between approximately 175 °C and approximately 215 °C, and preferably at the refluxing temperature of the reaction mixture, until a viscous liquid or a glassy solid is obtained.

11. Process according to Claim 9, characterized in that, for one mole of pyridine derivative, approximately 1 to approximately 2 moles of aromatic monoaldehyde and approximately 0 to approximately 0.5 mole of aromatic dialdehyde are reacted.

12. Process according to one of Claims 9 to 11, characterized in that it further comprises the addition of a catalyst of the polycondensation reaction of an aromatic monoaldehyde with a pyridine derivative containing activated methyl groups, such as sulphuric acid, para-toluenesulphonic acid, aluminium chloride, zinc chloride, tin fluoride, methyl iodide or benzyl chloride, used in a proportion of the order of 0.5 to 10 mol % with respect to the pyridine.

13. Process according to any one of Claims 9 to 12, characterized in that the polycondensation reaction is performed in the presence of a dehydrating agent such as acetic anhydride.

14. Process according to any one of Claims 9 to 13, characterized in that the polycondensation reaction is performed in an inert solvent whose boiling point is preferably above 150 °C, such as a dipolar aprotic solvent, a chlorinated solvent or a ketone of boiling point above 150 °C.

15. Process for preparing new polymers, characterized in that prepolymers according to any one of Claims 1 to 8 are shaped by any known process, in particular by moulding the prepolymers in the liquid state, where appropriate dissolved in a solvent, or by pressure moulding powdered prepolymers, and in that they are subjected to a curing heat treatment at a temperature of the order of 200 to 300 °C.

16. Process according to Claim 15, characterized in that the curing heat treatment comprises maintaining the shaped prepolymer at a temperature of the order of 200 °C before subsequent heating to more than 220 °C.

17. Application of the prepolymers according to any one of Claims 1 to 8 to the production of composite materials, in particular laminates, by impregnating fibrous materials by means of the said prepolymers and curing under pressure the fibrous materials thus impregnated.

18. Composite materials, in particular in the form of laminates, consisting of fibres such as carbon fibres and prepolymers according to any one of Claims 1 to 8, in the cured state.

## Patentansprüche

1. Wärmehärtbare Vorpolymere, gekennzeichnet durch den Gehalt, zumindest teilweise, an Polykondensationsprodukten mindestens eines Methylpyridinderivats mit mindestens zwei aktiven Methylgruppen (in Stellung 2, 4, 6) mit mindestens einem aromatischen Monoaldehyd mit mindestens einer Hydroxylgruppe.

2. Vorpolymere nach Anspruch 1, gekennzeichnet durch die Verwendung eines aromatischen Dialdehyds bei der Polykondensation.

3. Vorpolymere nach Anspruch 1 oder 2, dadurch gekennzeichnet, daß das Pyridinderivat unter 2, 4, 6-Trimethylpyridin, 2,4-Dimethylpyridin oder 2,6-Dimethylpyridin ausgewählt wird.

4. Vorpolymere nach einem der vorstehenden Ansprüche, dadurch gekennzeichnet, daß der aromatische Monoaldehyd ein oder zwei Hydroxylgruppen enthält.

5. Vorpolymere nach einem der Ansprüche 1 bis 4, dadurch gekennzeichnet, daß der aromatische Monoaldehyd unter o-Hydroxybenzaldehyd, m-Hydroxybenzaldehyd oder p-Hydroxybenzaldehyd ausgewählt wird.

6. Vorpolymere nach einem der Ansprüche 1 bis 5, dadurch gekennzeichnet, daß der aromatische Dialdehyd unter Phthalaldehyd, Isophthalaldehyd oder Terephthalaldehyd ausgewählt wird.

7. Vorpolymere nach einem der Ansprüche 1 bis 6, in Form von viskosen Flüssigkeiten, die in Lösungsmitteln löslich sind, wie Alkohlen oder Ketonen udn insbesondere Äthanol, Propanol, Azeton, Methyläthylketon, alleine oder gemischt, dipolaren aprotischen Lösungsmitteln, insbesondere Dimethylformamid, Dimethylacetamid und N-Methylpyrrolidon, oder chlorierten Lösungsmitteln, insbesondere Chloroform, Dichloräthan oder Tetrachloräthan.

8. Vorpolymere nach einem der Ansprüche 1 bis 6, in Form von glasartigen Feststoffen, die schmelzbar und in Lösungsmitteln löslich sind, wie Alkoholen oder Ketonen und insbesondere Äthanol, Propanol, Azeton, Methyläthylketon, alleine oder gemischt, dipolaren aprotischen Lösungsmitteln und insbesondere Dimethylformamid, Dimethylacetamid oder N-methylpyrrolidon, oder chlorierten Lösungsmitteln, insbesondere Chloroform, 1,2-Dichloräthan oder 1,1,2,2-Tetrachloräthan.

9. Verfahren zur Herstellung der Polymeren nach einem der Ansprüche 1 bis 8, gekennzeichnet durch Umsetzung eines Pyridinderivats mit mindestens zwei aktiven Methylgruppen in Stellung 2,4,6 und insbesondere 2,4,6-Trimethylpyridin, mit einem aromatischen Monoaldehyd mit mindestens einer Hydroxylgruppe und insbesondere Salicylaldehyd.

10. Verfahren zur Herstellung der Vorpolymere nach Anspruch 9, gekennzeichnet durch Umsetzung des Pyridinderivats mit mindestens zwei aktiven Methylgruppen und des aromatischen Monoaldehyds in Mengen, die etwa einer Aldehydgruppe je aktiver Methylgruppe entsprechen, bei einer Temperatur von etwa 175 bis 215 °C und vorzugsweise bei Rückflußtemperatur des Reaktionsgemisches, bis zur Herstellung einer viskosen Flüssigkeit oder eines glasartigen Feststoffs.

11. Verfahren nach Anspruch 9, gekennzeichnet durch Umsetzung von etwa 1 bis etwa 2 Mol aromatischen Monoaldehyd und etwa 0 bis 0,5 Mol aromatischen Dialdehyd je Mol Pyridinderivat.

12. Verfahren nach einem der Ansprüche 9 bis 11, gekennzeichnet durch die Zugabe eines Katalysators zur Polykondensationsreaktion des aromatischen Monoaldehyds mit dem Pyridinderivat mit aktiven Methylgruppen, wie Schwefelsäure, p-Toluolsulfonsäure, Aluminiumchlorid, Zinkchlorid, Zinnfluorid, Methyljodid oder Benzylchlorid in einer Menge von etwa 0,5 bis etwa 10 Mol %, bezogen auf das Pyridin.

13. Verfahren nach einem der Ansprüche 9 bis 12, gekennzeichnet durch die Durchführung der Polykondensation in Gegenwart eines Entwässerungsmittels, wie Essigsäureanhydrid.

14. Verfahren nach einem der Ansprüche 9 bis 13, gekennzeichnet durch Durchführung der Polykondensation in einem inerten Lösungsmittel, dessen Siedepunkt vorzugsweise über 150 °C liegt, wie einem dipolaren aprotischen Lösungsmittel, einem chlorierten Lösungsmittel oder einem Keton mit einem Siedepunkt über 150 °C.

15. Verfahren zur Herstellung von neuen Polymeren, gekennzeichnet durch Formen der Vorpolymere nach einem der Ansprüche 1 bis 8 in an sich bekannter Weise, insbesondere durch Formen der Vorpolymere im flüssigen Zustand, ggf. gelöst in einem Lösungsmittel, oder durch Druckformen der pulverförmigen Vorpolymere und Wärmehärtung bei einer Temperatur von etwa 200 bis 300 °C.

16. Verfahren nach Anspruch 15, dadurch gekennzeichnet, daß die Wärmehärtung ein Erhitzen der geformten Vorpolymere auf eine Temperatur von etwa 200 °C und dann ein Erhitzen auf über 220 °C umfaßt.

17. Verwendung der Vorpolymere nach einem der Ansprüche 1 bis 8 zur Herstellung von Verbundmaterial, insbesondere von Schichtpreßstoffen, durch Imprägnierung von Fasern mit den Vorpolymeren und Druckhärtung der so imprägnierten Fasern.

18. Verbundmaterial, insbesondere in Form von Schichtpreßstoffen, aus Fasern, wie Kohlenstoffasern und Vorpolymeren nach einem der Ansprüche 1 bis 8, im gehärteten Zustand.